# EUROPEAN PATENT SPECIFICATION

(11) **EP 3 713 186 B1**
(45) Date of publication and mention of the grant of the patent: **17.01.2024**
(21) Application number: 19163720.6
(22) Date of filing: 19.03.2019
(51) Int. Cl.: H04L 61/2596, H04W 8/26, H04W 12/06

(54) **TECHNIQUES FOR ENABLING UNIQUE UTILIZATION OF IDENTITIES WITHIN A COMMUNICATION NETWORK**
VERFAHREN ZUR ERMÖGLICHUNG DER EINMALIGEN VERWENDUNG VON IDENTITÄTEN IN EINEM KOMMUNIKATIONSNETZWERK
TECHNIQUES PERMETTANT L'UTILISATION UNIQUE D'IDENTITÉS À L'INTÉRIEUR D'UN RÉSEAU DE COMMUNICATION

(43) Date of publication of application: 23.09.2020
(73) Proprietor: Deutsche Telekom AG, 53113 Bonn (DE); Giesecke+Devrient Mobile Security Germany GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- WO-A1-2013/105977
- NOKIA SIEMENS NETWORKS ET AL: "External Identifier Usage", 3GPP DRAFT; S2-121050_IDENTIFIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Vancouver, Canada; 20120206 - 20120210, 10 February 2012 (2012-02-10), XP050576882, [retrieved on 2012-02-10]

## Description

### TECHNICAL FIELD

The disclosure relates to techniques for enabling unique utilization of identities such as International Mobile Subscriber Identities (IMSIs) or the SUPI (Subscription Permanent Identifier) within a communication network, in particular within a 5G New Radio (NR) network. In particular, the disclosure relates to the multiple use of such identifiers in computing networks by use of a conversion table, which can be also a block chain or a distributed ledger. The disclosure further relates to 5G New Radio (NR) networks and extended SIM authentication within 5G NR networks and obfuscation of these identifiers such as described in the standard by the so called SUCI (Subscription Concealed Identifier).

### BACKGROUND

The number of identities currently (IMSI) and in future (SUPI) used in cellular networks is limited. In addition, these identities are transmitted over the network in plain and can be later assigned to persons (GDPR and IMSI-Catcher attacks).

Especially new networks such as 5G require a large number of identities for a unique identification of many more and different network components e.g. LPWAN loT with many billions of new devices.

In addition Edge Computing enables server-based applications to be brought "closer" to the user equipment (UE) and thus lower latency in the "round trip time" (RTT). In particular, mobile network operators (MNOs) are making efforts to integrate edge computing into their networks. Due to the low latency, it is possible that complex calculations can run on the server (instead of the UE) while still realizing "real-time critical" or "near real-time critical" functionalities. These ad hoc communication scenarios require a large number of new and flexible assigned identities.

WO 2013/105977 A1 shows a method and apparatus for routing messages in a machine-type communication (MTC) architecture. The method includes receiving a request at a MTC-proxy residing at an egress of a network. The request includes an international mobile subscriber identity (IMSI) for which a destination is outside the network. The method further includes replacing, by the MTC-proxy, the IMSI in the request with an external identifier.

### SUMMARY OF THE INVENTION

It is the object of the present invention to provide a concept to solve the above-mentioned problems, in particular to provide a solution for avoiding that network components may run out of identities such as IMSI, SUPI or SUCI. In particular, it is the object of the invention to provide a concept that eliminates the disadvantage of the limited number of identities in heterogeneous and highly flexible 5G networks.

In addition a way to obfuscate these identities is described, which is not based on encryption. The standard so far only describes obfuscation technologies using encryption e.g. 3GPP TS 23.701.

The foregoing and other objects are achieved by the subject matter of the independent claim. Further implementation forms are apparent from the dependent claims, the description and the figures.

The disclosure is based on the concept of a novel conversion table for converting temporarily identities to global identities according to a conversion scheme that enables unique utilization of global identities within the communication network. The conversion table ensures that a temporarily identity is unique in the network. The conversion table further ensures that a temporarily identity is not used by different network components at the same time while allowing reuse of the same temporarily identity by different network components at different time intervals. The conversion table may be stored in a local database or block chain or distributed ledger for safely recording use of the various global and temporarily identities.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network or communication system refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal or user equipment as described above, for example, a mobile phone or a mobile device with mobile adapter or a machine terminal.

According to a first aspect the invention relates to a communication system for providing communication within a communication network, in particular a 5G communication network, according to independent claim 1.

Further embodiments of the communication system are provided in dependent claims 2-10.

By applying such previously mentioned conversion table, the same temporary identity, e.g. an IMSI, assigned to the communication terminal can be used several times in different network components of the communication network, e.g. in different temporary 5G networks or EDGE components. Multiple use of IMSls in temporary 5G networks (EDGE computing) can be enabled by address translation provided by the conversion table. This makes authentication in 5G networks more flexible across network boundaries.

In an exemplary implementation form of the communication system, the network-side conversion table is stored in one or more different de-centralized locations of the cellular network, in particular in an edge computing device of a 5G communication network, wherein the temporary identity is only agreed between the network device and the edge computing device and only temporarily known.

This provides the advantage that the temporary identities can be released after a specific time for being reused by other devices.

In an exemplary implementation form of the communication system, a new network-side table entry comprises the temporary identity assigned to the extended communication terminal, a network address of the at least one communication terminal and an index indicating which global identity is used.

This provides the advantage that the temporary identity can be bound to a network address for receiving data. The relation between temporary and global identity can be stored by the index.

In an exemplary implementation form, the communication system is configured to authenticate the at least one communication terminal based on the temporary identity and configured to authenticate the extended communication terminal based on the global identity.

This improves security as the communication system can authenticate the at least one communication terminal temporarily within the enhanced communication terminal by using the temporarily identity while authenticating the enhanced communication terminal globally by using the global identity. Hence, authentication keys do not leave the enhanced communication terminal.

In an exemplary implementation form or the communication system, the network device is configured to enable assigning the same temporary identity to the extended communication terminal within non-overlapping time intervals allowing time-wise sequential reuse, and to block assigning the same temporary identity to two different devices within a same time interval.

This provides the advantage that the same temporary identities can be reused, thereby allowing efficient utilization of identities.

In an exemplary implementation form or the communication system, the temporary identity of the at least one communication terminal comprises an International Mobile Subscriber Identity, IMSI or a Subscription Permanent Identifier, SUPI.

This provides the advantage that the temporarily identity can be shared between multiple extended communication terminals such as Edge computing networks in order to provide efficient usage of global identities such as IMSIs, SUPIs or SUCIs.

In an exemplary implementation form or the communication system, the temporary identity is encrypted according an encryption of a Subscription Concealed Identifier, SUCI.

This provides the advantage that the temporary identities are compliant with 5G networks.

In an exemplary implementation form of the communication system, the temporarily identity of the at least one communication terminal comprises an International Mobile Subscriber Identity, IMSI.

This provides the advantage that IMSIs assigned to communication terminals can be reused based on the conversion table. The problem of network components running out of IMSIs can be solved by reusing the IMSIs.

In an exemplary implementation form of the communication system, wherein an IMSI, SUPI or SUCI of the at least one communication terminal is stored or calculated by a subscriber identity module, SIM, associated with the at least one communication terminal; and the network device is configured to authenticate the extended communication terminal based on the SIM.

This provides the advantage that the extended communication terminal can be authenticated in the same manner as the communication terminal, i.e., by a SIM module or SIM card assigned to the communication terminal. This facilitates detection of the extended communication terminal in the communication network, e.g. identification of the novel entity by the authentication center or the HLR (home location register) or by other network services or other subscribers.

In an exemplary implementation form of the communication system, the network device is configured to provide the extended communication terminal based on pairing the at least one communication terminal with the edge computing device.

This provides the advantage that the extended communication terminal can be identified as a single network entity by the communication network. Hence communication procedures can be adopted from the communication device to the extended communication device without changes. Thus, reuse of existing communication protocols can be achieved.

In an exemplary implementation form of the communication system, the network device is configured to establish a communication channel between the extended communication terminal and a remote communication terminal in the communication network based on a temporary identity assigned to the extended communication terminal.

This facilitates communication of the extended communication terminal with other communication terminals in the network. Existing communication procedures may be reused.

In an exemplary implementation form of the communication system, the network device is configured to establish an end-to-end encrypted tunnel and/or to exchange a symmetric key between the extended communication terminal and a remote communication terminal based on authentication with a temporary identity of the extended communication terminal.

This facilitates communication of the extended communication terminal with other communication terminals in the network. Existing communication procedures may be reused.

In an exemplary implementation form of the communication system, the network or the edge device comprises a block chain or distributed ledger for storing the conversion table.

Such a block chain or distributed ledger guarantees secure and reliable assignment of global identities, e.g. IMSIs.

In an exemplary implementation form of the communication system, the communication terminal or the cellular network or an edge computing device is configured to create a new entry related to a new temporary identity in the block chain or distributed ledger.

This provides flexibility as various components are allowed to access the block chain or distributed ledger for creating entries.

In an exemplary implementation form of the communication system, the new block chain or distributed ledger entry comprises the temporary identity and a hash pointer pointing to a previous entry with a previous temporary identity of the same extended communication terminal.

This provides the advantage that the entries are protected against malicious attacks.

In an exemplary implementation form of the communication system, the communication terminal or the cellular network or the edge computing device is configured to check the block chain or distributed ledger for collisions with the new created temporary identity and other temporary identities already in use.

This improves security of the communication system and the whole cellular network.

Embodiments of the invention can be implemented in hardware and/or software.

### BRIEF DESCRIPTION OF THE DRAWINGS

Further embodiments of the invention will be described with respect to the following figures, wherein:
Fig. 1 shows a block diagram of a communication system 100 according to the disclosure;
Fig. 2 shows a schematic diagram illustrating an exemplary architecture 200 of dynamic IMSI via 5G gateway/base station;
Fig. 3 shows a schematic diagram illustrating an exemplary conversion table 300 within an EDGE authentication center 310;
Fig. 4 shows a schematic diagram illustrating an exemplary architecture 400 of dynamic IMSI via block chain or distributed ledger 405;
Fig. 5 shows a schematic diagram illustrating exemplary creation of entries within a block chain or a distributed ledger 405;
Fig. 6 shows a network architecture 600 including an exemplary 5G EDGE 621 with enhanced SIM authentication;
Fig. 7 shows a network architecture 700 including an exemplary 5G EDGE 621 with end-to-end encryption; and
Fig. 8 shows a block diagram of a method 800 for connecting a communication terminal comprising a global identity to a communication network according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following section, edge computing nodes and edge computing devices are described. Edge computing is a distributed computing paradigm in which computation is largely or completely performed on distributed device nodes known as smart devices or edge devices as opposed to primarily taking place in a centralized cloud environment. The eponymous "edge" refers to the geographic distribution of computing nodes in the network as Internet of Things devices, which are at the "edge" of an enterprise, metropolitan or other network. The motivation is to provide server resources, data analysis and artificial intelligence ("ambient intelligence") closer to data collection sources and cyber-physical systems such as smart sensors and actuators. Edge computing is seen as important in the realization of physical computing, smart cities, ubiquitous computing and the Internet of Things.

Edge computing pushes applications, data and computing power (services) away from centralized points to the logical extremes of a network. Edge computing takes advantage of microservices architectures to allow some portion of applications to be moved to the edge of the network. Edge Computing moves fragments of application logic out to the edge. As a technological paradigm, edge computing may be architecturally organized as peer-to-peer computing, autonomic (self-healing) computing, grid computing, and by other names implying non-centralized availability.

In the following, network devices and network entities are described such as network access entities and core network entities. The network access entity enables access and mobility management in the communication network. Via the network access entity, communication terminals with their identity (UE ID) can register in the communication network and receive the permission to set up a communication connection. For example, in the 5G communication network, the network access entity may be an AMF (Access and Mobility Management Function) representing the access and mobility management function. This manages the access and mobility control. The AMF may also include network slice selection functionality. For wireless access, mobility management is not needed. The network access entity may be, for example, an MME (mobility management entity) in the 4G communication network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

The radio access network (RAN) is part of a mobile communication system. It implements a radio access technology (RAT). Conceptually, it resides between a communication terminal or communication device such as a mobile phone, a computer, or any remotely controlled machine and provides connection with its core network (CN). Depending on the standard, mobile phones and other wireless connected terminals or devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN. The RAN entity can for example include a base station, e.g. a NodeB or and eNodeB or a 5G capable radio cell.

The network access entity further provides the technical function of first establishing a security relationship with a previously unknown security device, in order to then be able to install security elements (keys) in the terminal or device itself and in the network application function (NAF) of the network access function. For example, the Diameter and Hypertext Transfer Protocol (http) protocols can be used.

Involved in the maintenance of such a generic security relationship are the following functional elements: communication terminal, e.g. a mobile phone, i.e. User Equipment (UE), which wants to use a particular service, application server that provides the service, e.g. for Mobile TV, VoLTE, VoIP, FTP data transfer, media streaming, Internet browsing, etc., Network Application Function (NAF), the network access entity itself, which establishes a security relationship between UE and NAF and a database of the home network, e.g. HSS Home Subscriber Server (HSS) or UDR, unified data repository of the (mobile) network provider, which manages the respective user-specific profiles of its terminal users.

The network access entity network access feature is consulted by the application server (NAF) after a terminal has requested service access from it. Since the application server does not yet know the terminal at this time, it first refers this to the network access function. The terminal and the network access function now authenticate to each other; this can be done, for example, by means of the AKA protocol (Authentication and Key Agreement) and by inquiring the network access function to the Home Subscriber Server (HSS) or the UDR database of the home network. Subsequently, the network access function and the terminal (UE) agree on a session key to be used for encrypted data exchange with the application server (NAF). If the terminal now again turns to the application server, it can obtain both the session key and subscriber-specific data from the network access function and start the data exchange with the terminal (UE). The appropriate session keys are used for cryptographic protection.

A blockchain, as described in this disclosure, is a growing list of records, called *blocks,* which are linked using cryptography. Each block contains a cryptographic hash of the previous block, a timestamp, and transaction data (generally represented as a merkle tree root hash). By design, a blockchain is resistant to modification of the data. It is an open, distributed ledger that can record transactions between two parties efficiently and in a verifiable and permanent way. For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. Although blockchain records are not unalterable, blockchains may be considered secure by design and exemplify a distributed computing system with high Byzantine fault tolerance.

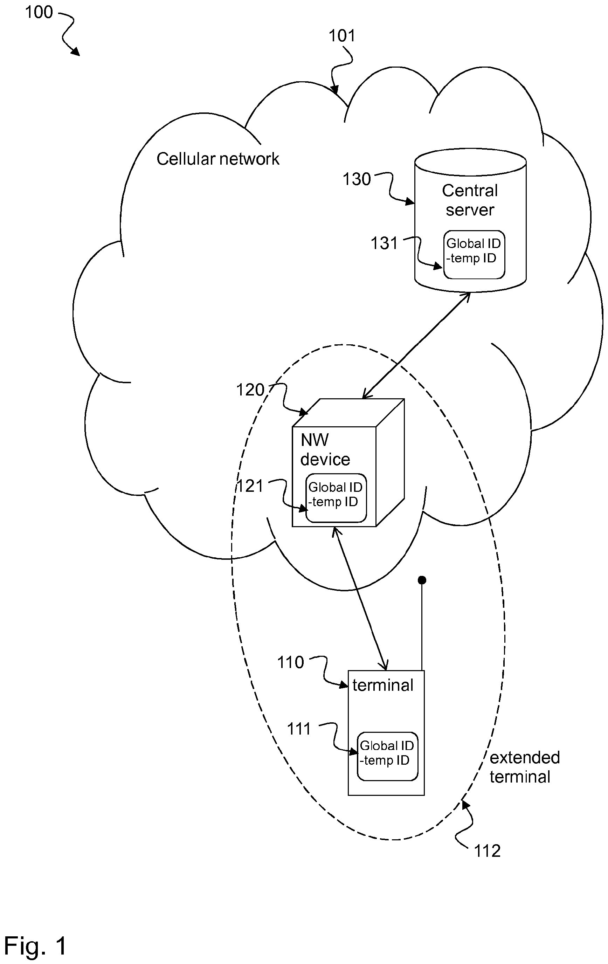

Fig. 1 shows a block diagram of a communication system 100 according to the disclosure. The communication system 100 may be used for providing communication within a cellular network 101, in particular a 5G communication network.

The communication system 100 comprises one or more communication terminals (Fig. 1 shows communication terminal 110), each one having a global identity such as an International Mobile Subscriber Identity (IMSI). The communication terminal 110 comprises a terminal-side conversion table 111 for translating the global identity into a temporary identity. A corresponding conversion table 131 is hold in a central location of the cellular network, e.g. at a central server 130 shown in Fig. 1.

The communication system 100 comprises a network device 120 that is configured to connect the one or more communication terminals 110 at least temporarily (e.g. for a predetermined time interval or based upon request) with the cellular network 101 to an extended communication terminal 112 for processing applications of the communication terminal 110 and to assign a global identity to the extended communication terminal 112. The network device 120 may be a server or computer located at an edge of the cellular network 101, e.g. an edge computing device. The network device 120 is configured to derive the global identity from a network-side conversion table 121 that converts global identities in the cellular network 101 to temporary identities of extended communication terminals 112 according to a conversion scheme that enables unique utilization of temporary identities within the cellular network 101. The extended communication terminal 112 may be a combination of the UE 110 and network resources of the cellular network that are assigned to the UE 110 in order to improve the processing power or the memory or reduce the latency of the processing tasks performed by the UE 110. These network resources of the cellular network may for example comprise network entities located at an edge of the cellular network 101 in close proximity to the UE 110 in order to reduce latency between the processing of the UE and the processing of the network resources.

The network-side conversion table 111 has a central representation 131 in the cellular network 101 that allows identity management in the cellular network 101 ensuring that the communication terminal 110 appears for external parties with different identities. For example, inside the cellular network 101, the communication terminal 110 may be identified by its temporary address and outside the cellular network, external devices may address the UE under its global ID. The central representation 131 in the cellular network 101 may represent both tables, the network-side conversion table 121 and the terminal-side conversion table 111 and may synchronize both tables.

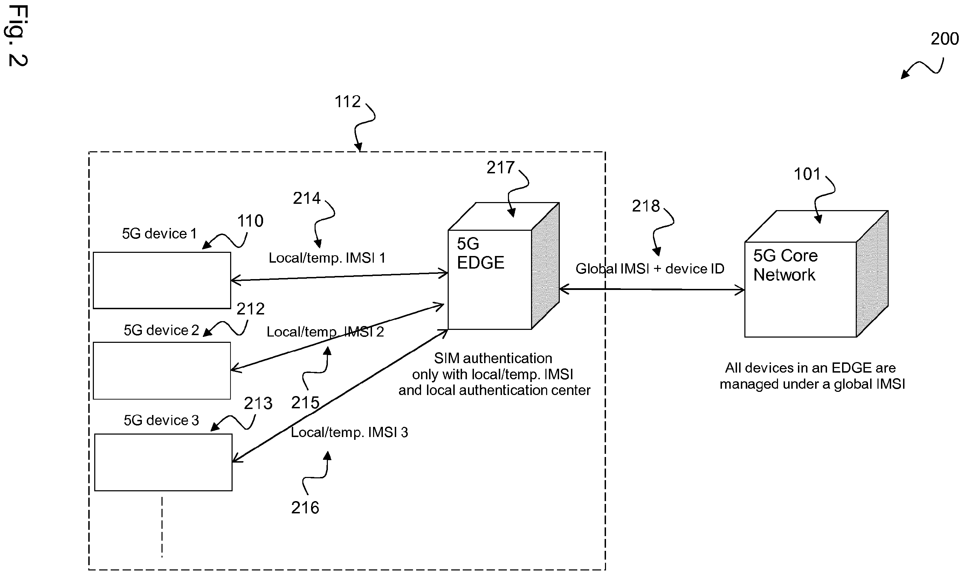

The network-side conversion table 121 may be stored in one or more different de-centralized locations of the cellular network 101, in particular in an edge computing device 217 of a 5G communication network, e.g. as described below with respect to Fig. 2. The temporary identity may only be agreed between the network device 110 and the edge computing device 217 and only temporarily known.

A new network-side table 121 entry may include the temporary identity assigned to the extended communication terminal 112, a network address of the one or more communication terminals 110 and an index indicating which global identity is used.

The communication system 100 may be configured to authenticate the at least one communication terminal 110 based on its temporary identity and authenticate the extended communication terminal 112 based on the global identity assigned to the extended communication terminal 112.

The network device 120 may enable assigning the same temporary identity to the extended communication terminal 112 within non-overlapping time intervals allowing time-wise sequential reuse. Otherwise, the network device 120 may block assigning the same temporary identity to two different devices within a same time interval.

The temporary identity of the at least one communication terminal 110 may for example include an International Mobile Subscriber Identity, IMSI or a Subscription Permanent Identifier, SUPI.

The temporary identity may be encrypted according to an encryption of a Subscription Concealed Identifier, SUCI, e.g. by using common encryption techniques.

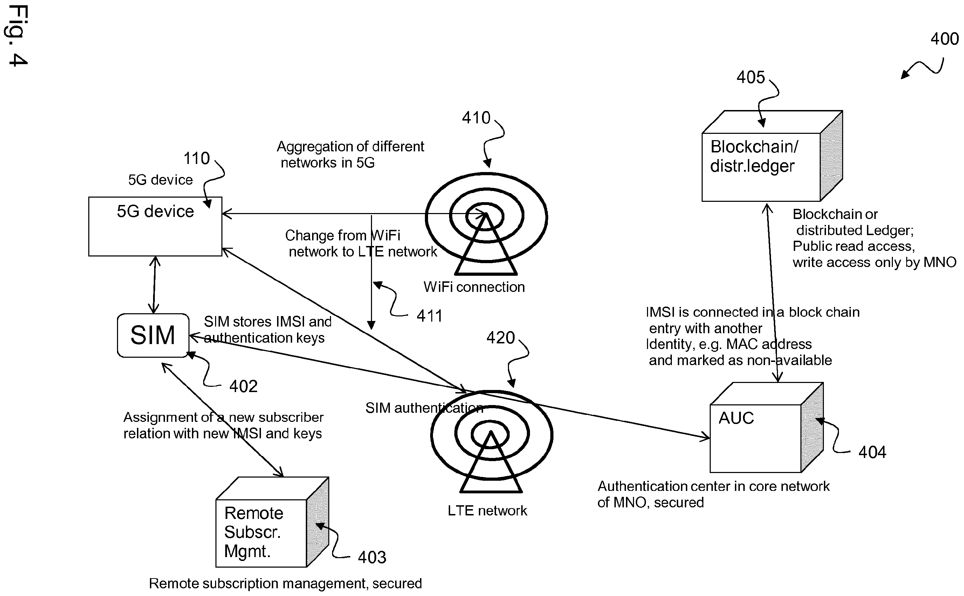

The IMSI, SUPI or SUCI of the communication terminal 110 may be stored or calculated by a subscriber identity module, SIM, e.g. a SIM 402 as described below with respect to Fig. 4, associated with the communication terminal 110. The network device 120 may authenticate the extended communication terminal 112 based on the SIM 402.

The network device 120 may provide the extended communication terminal 112 based on pairing the at least one communication terminal 110 with the edge computing device 217 (shown in Fig. 2). Pairing can be implemented by a 1:1 relation, i.e. one communication terminal 110 paired with one edge computing device, or by a 1:n relation i.e. one communication terminal 110 paired with a plurality of n edge computing devices, or by a n:1 relation, i.e. a plurality of n communication terminals 110 paired with one edge computing device, or by a n:n relation i.e. a plurality of n communication terminals 110 paired with a plurality of n or m edge computing devices.

The network device 120 may be configured to establish a communication channel between the extended communication terminal 112 and a remote communication terminal in the cellular network 101 based on a temporary identity of the extended communication terminal 112. I.e. the extended communication terminal may be identified and addressed by its temporary ID, e.g. its temporary IMSI.

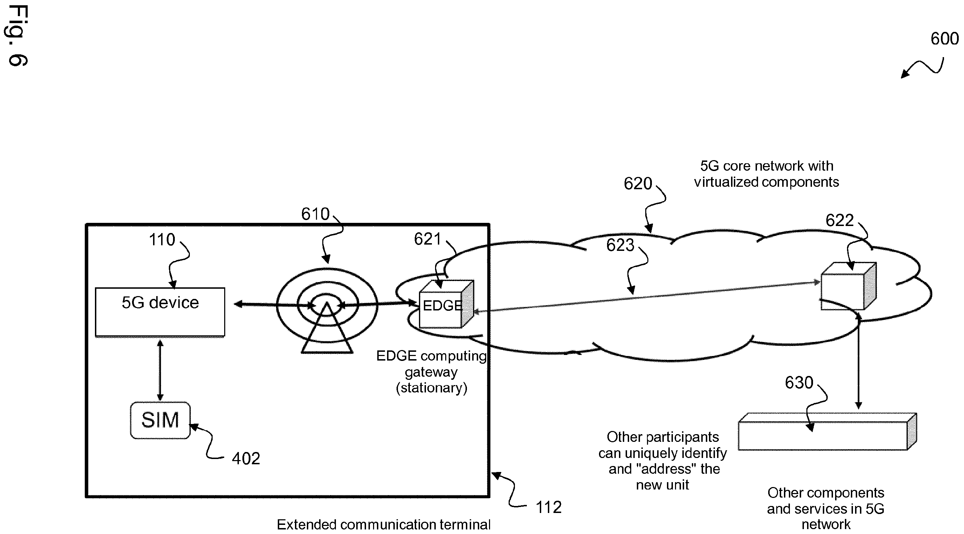

The network device 120 may establish an end-to-end encrypted tunnel (e.g. a tunnel 624 as described below with respect to Fig. 6) and/or exchange a symmetric key between the extended communication terminal 112 and a remote communication terminal based on authentication with a temporary identity of the extended communication terminal 112. I.e., the extended communication terminal may be identified and authenticated by its temporary ID, e.g. its temporary IMSI.

The cellular network 101 or the edge computing device 217 may comprise a block chain 405 or distributed ledger 405, e.g. as described below with respect to Fig. 4, for storing the network-side conversion table 121.

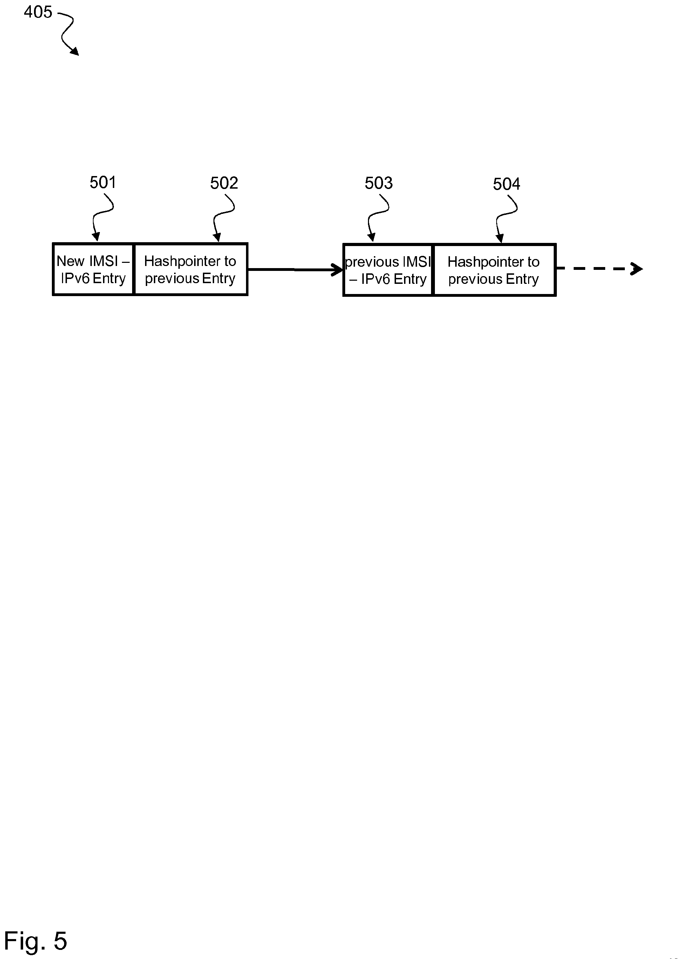

The communication terminal 110 or the cellular network 101 or an edge computing device 217 may be configured to create a new entry 501 related to a new temporary identity in the block chain 405 or distributed ledger 405, e.g. as described below with respect to Figures 4 and 5.

The new block chain or distributed ledger entry 501 comprises the temporary identity and a hash pointer 502 pointing to a previous entry 503 with a previous temporary identity of the same extended communication terminal 112, e.g. as described below with respect to Figures 4 and 5.

The communication terminal 110 or the cellular network 101 or the edge computing device 217 may be configured to check the block chain 405 or distributed ledger 405 for collisions with the new created temporary identity and other temporary identities already in use.

Fig. 2 shows a schematic diagram illustrating an exemplary architecture 200 of dynamic IMSI via 5G gateway/base station.

In this system architecture 200, multiple 5G devices 110, 212, 213 are connected to one 5G EDGE node 217, e.g. consisting of one or more edge computing devices. The first 5G device 110 may correspond to the terminal 110 described above with respect to Fig. 1. Each 5G device 110, 212, 213 may be identified by its temporary (also referred to as local) IMSI 214, 215, 216. The devices authenticate with a local authentication center based on their local/temporary IMSI. The local authentication center may be located in the 5G EDGE 217 or in another network node of the cellular network 101, preferably at an edge of the cellular network 101 close to the respective terminal. The connection between the 5G devices 110, 212, 213 and the 5G EDGE 217 constitutes an extended communication terminal 112 which bundles the processing power of the respective terminals 110, 212, 213 with the communication power and resources of the 5G EDGE node 217. This extended communication terminal 112 can connect to 5G core network 101 which may correspond to the cellular network 101 described above with respect to Fig. 1. The connection between extended communication terminal 112 and 5G core network 101 is identified and addressed based on the global IMSI assigned to the extended communication terminal 112 and a device ID of the extended communication terminal 112, for example a MAC address or an IP address. Hence, all devices 110, 212, 213 in an EDGE are managed under a global IMSI 218.

As the number of IMSls is limited and already has a restrictive effect on the MNO, the locally limited use of IMSIs as presented in the disclosure can eliminate the disadvantage of the limited number of IMSls in heterogeneous 5G networks.

As shown in Fig. 2, the same IMSI 218 can be used several times in local 5G networks or EDGE. For this purpose, the 5G-EDGE unit 217 is bundled with various communication endpoints 110, 212, 213 and appears in the overall network under an address (global IMSI 218). Data is then stored in the 5G-EDGE unit 217 according to another unique device ID e.g. Channel MAC or IPv6 address. Unlike traditional IPv4 address translation, this technique is used to enable end-to-end authenticated connections. The management of the IMSls can be performed by the protocol "below" the IP layer, even non-IP connections can be supported. The 5G-EDGE Gateway 217 is security-critical, since the AUC manages authentication keys and the gateway 217 itself contains temporary transport keys.

Multiple use of IMSls on local 5G networks (EDGE computing) is enabled by address translation. This makes authentication in 5G networks more flexible and possible across network boundaries.

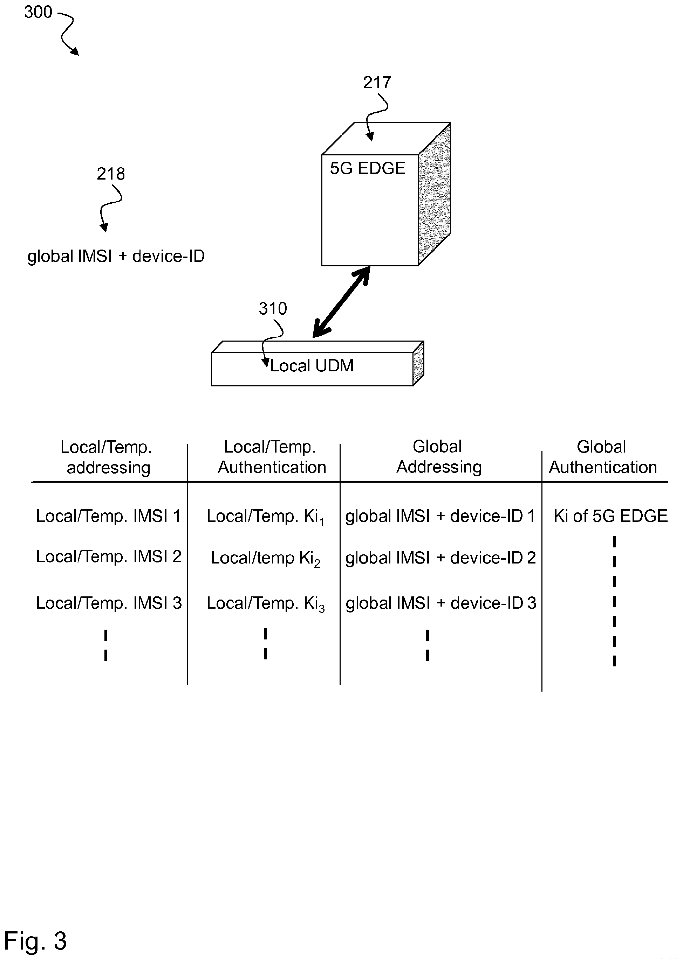

Fig. 3 shows a schematic diagram illustrating an exemplary conversion table 300 within an EDGE authentication center 310. The conversion table 300 may be stored in a local authentication center (AUC), e.g. a local UDM (Unified Data Management) in 5G networks. The conversion table 300 stores the conversion between local or temporary addressing of the 5G devices 110, 212, 213 using IMSI 1, IMSI 2, IMSI 3, local or temporary authentication of the 5G devices 110, 212, 213 using keys Ki1, Ki2, Ki3, global addressing of the 5G devices 110, 212, 213 using global IMSI and device ID 1, 2, 3 and global authentication of the 5G devices 110, 212, 213 using Ki of 5G EDGE.

5G EDGE node 217 provides SIM authentication with only local IMSI and local authenticaton center 310. All devices in the EDGE are managed under a global IMSI 311. Authentication security of the local UDM 310 is highly critical due to the storage of symmetric authentication keys in local UDM 310. Authentication security of the 5G EDGE node 217 is medium critical due to the use and management of cryptographic transport keys.

Fig. 4 shows a schematic diagram illustrating an exemplary architecture 400 of dynamic IMSI via block chain or distributed ledger 405. A 5G device 110 may include a SIM 402 that stores IMSI and authentication keys. A remote subscription management entity 403 performs secured remote subscription management by assignment of a new subscriber relation with new IMSI and keys.

The 5G device 110 may be connected to different networks, e.g. to a WiFi network 410 and to an LTE network 420. When 5G device 110 changes its connection from WiFi network 410 to LTE network 420, SIM 402 authenticates 5G device with LTE network 420 by connecting to Authentication center (AUC) 404 in core network of MNO (by secured connection). AUC 404 requests blockchain 405 or distributed ledger 405 to create new block chain entry. IMSI is connected in new block chain entry with another identity, e.g. MAC address of the 5G device 110. Then, IMSI is marked as non-available in order to avoid using the same IMSI twice.

Edge Computing enables server-based applications to be brought "closer" to the user equipment (UE) and thus reduces latency in the "round trip time" (RTT). In particular, MNOs are making efforts to integrate edge computing into their networks 410, 420. Due to the low latency, complex calculations can run on the server (instead of the UE 110) while still realizing "real-time critical" or "near-real-time" functionalities. The system 400 allows identity management in mobile networks, especially IMSI (International Subscriber Identity), merging of different networks 410, 420 at 5G, authentication and identification using SIM Cards 402, e.g. eUICC or iUICC, RSP (Remote Subscription Management) and SIM personalization.

The reuse of IMSIs in connection with blockchains 405 as illustrated in Fig. 4 eliminates the disadvantage of the limited number of ISMIs in heterogeneous 5G networks.

The same IMSI can be used multiple times, because in heterogeneous 5G networks, a device 110 does not always need an IMSI because, for example, it may not be located in any cellular network or does not send any data.

The IMSIs can be placed in a blockchain 405 in connection with another unique identity e.g. MAC or iPv6 address of the device 110. The other unique identity preferably has a corresponding length (high number range) and a multiple assignment is thereby excluded.

With a new entry, this connection IMSI-IPv6 address can be canceled or changed at any time.

RSP allows the device 110 to assign the appropriate subscription with corresponding new IMSI.

This provides the advantage that multiple use of IMSls is feasible and and can be traced by publicly stored entries in a blockchain 405 or distributed ledger 405. This makes the authentication in 5G networks more flexible, since here the IMSI is required in the Authentication Center (AUC) of the mobile network operator.

Fig. 5 shows a schematic diagram illustrating exemplary creation of entries within a block chain or a distributed ledger 405.

The blockchain 405 is a growing list of records 501, 503, called *blocks,* which are linked using cryptography. Each block 501, 503 contains a cryptographic hash 502, 504 of the previous block, a timestamp, and transaction data (generally represented as a merkle tree root hash). By design, the blockchain 405 is resistant to modification of the data. It is an open, distributed ledger that can record transactions between two parties efficiently and in a verifiable and permanent way. For use as a distributed ledger, the blockchain 405 may be managed, for example, by a peer-to-peer network collectively adhering to a protocol for inter-node communication and validating new blocks. Once recorded, the data in any given block 501, 503 cannot be altered retroactively without alteration of all subsequent blocks, which requires consensus of the network majority. Although blockchain records 501, 503 are not unalterable, blockchains may be considered secure by design and exemplify a distributed computing system with high Byzantine fault tolerance.

When a new entry 501 in the blockchain 405 is created, IMSI and IPv6 is stored in this entry 501 and a hashpointer 502 to the previous entry 503 is generated that points to the previous entry 503. This previous entry 503 is also connected with a hashpointer 504 pointing to the previous entry.

Fig. 6 shows network architecture 600 including an exemplary 5G EDGE 621 with enhanced SIM authentication.

Edge Computing enables server-based applications, e.g. running on the EDGE node 621, to be brought "closer" to the user equipment (UE) 110 and thus lower latency in the "round trip time" (RTT). In particular, MNOs are making efforts to integrate edge computing into their networks. Due to the low latency, complex calculations can run on the server, i.e. EDGE node 621 (instead of the UE 110) while still realizing "real-time critical" or "near-real-time" functionalities. 5G endpoints 110 may have too little computational power or too small a database to be able to solve complex tasks quickly, e.g. facial or semantic speech recognition. To accomplish this task, the 5G endpoint 110 is connected to an "EDGE computing" device 621 preferably via a "low latency" route. The 5G device 110 is equipped with a SIM 402 that may store the IMSI International Mobile Subscriber Identity. Identity management and authentication may be performed with secured credentials e.g. on the SIM 402. EDGE computing may be performed by the extended terminal 112 including 5G device 110, SIM 402, access network 610 and EDGE node 621, e.g. with 5G core network.

The 5G endpoint 110 is uniquely identified via the IMSI on the SIM 402 or other secure identity in the 5G network. However, "EDGE computing" devices 621 or gateways 621 have no global identity in the 5G network. According to the concept described in this disclosure, the EDGE computing devices 621 or gateways 621 are therefore integrated in the identity management of 5G networks 620. This provides the advantage that the 5G network 620 knows which device or which user is using a service, e.g. for the billing of services.

The network architecture 600 implements a pairing of 5G endpoint 110 and EDGE computing device 621 into one unit, i.e. the extended communication terminal 112 as described above with respect to Fig. 1, with a common identity e.g. IMSI. For this, methods known in the art may be used, e.g. Certificate-based authentication in a PKI.

This unit or extended communication terminal 112 may be identified at the AUC in the HLR or other services and participants. The unit 112 may further be integrated in the network 620 under a common known identity. Hence, data generated or processed by that unit 112 can be uniquely assigned.

In the exemplary implementation shown in Fig. 6, the authentication can be extended to establish a secure channel 623 from the EDGE device 621 to the remote station 622 in the network 620 or even to other parties 630 through the network 620. In this case, a "handshake" method can be used to negotiate a symmetric key for the transport security.

The advantages of this concept are that mobile 5G devices 110 such as for example car, mobile phones, etc. can ad hoc connect to a stationary "EDGE" gateway 621 and this "new" combination (referred to as extended communication terminal 112) can act as a separate entity 112 in the network 620. Applications for this can be compute-intensive operations in the Artificial Intelligence (Al) environment, e.g. semantic speech recognition or the interpretation of complex information from the environment of the 5G-Enpoint 110, e.g. obstacles in autonomous driving.

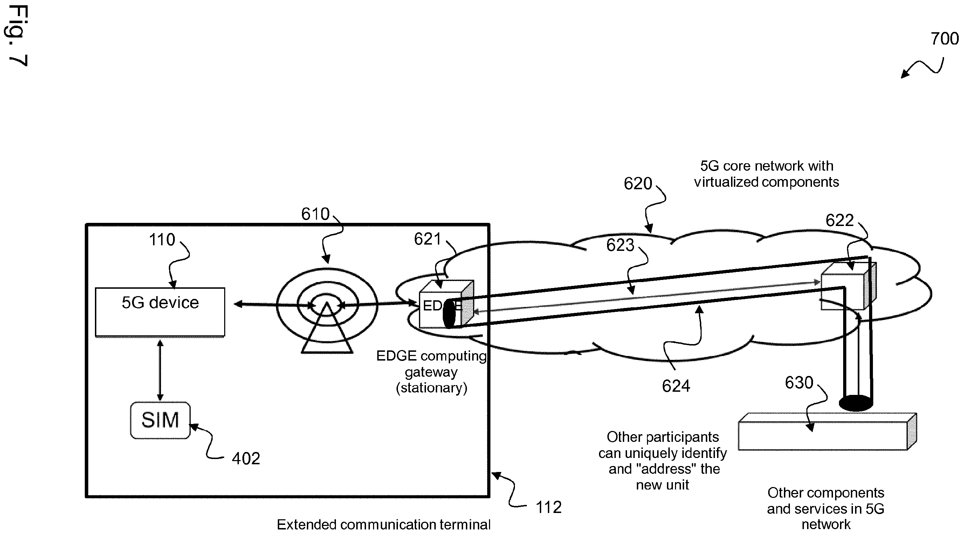

Fig. 7 shows network architecture 700 including an exemplary 5G EDGE 621 with end-to-end encryption.

The network architecture 700 corresponds to the architecture 600 described above with respect to Fig. 6 with the difference that connection between EDGE node 621 and the remote station 622 in the network 620 or other parties 630 through the network 620 is established by a secure tunnel 624.

5G endpoint 110 is provided with its identity (e.g., IMSI International Mobile Subscriber Identity) by the SIM 402. The SIM authentication may be used to build an end-to-end encrypted tunnel 624. Tunnel endpoint A may be at the EDGE device 621 and tunnel endpoint B may be at the remote device 630 or alternatively at the network device 622. Network device 622 may be a virtualized component of the 5G network 620.

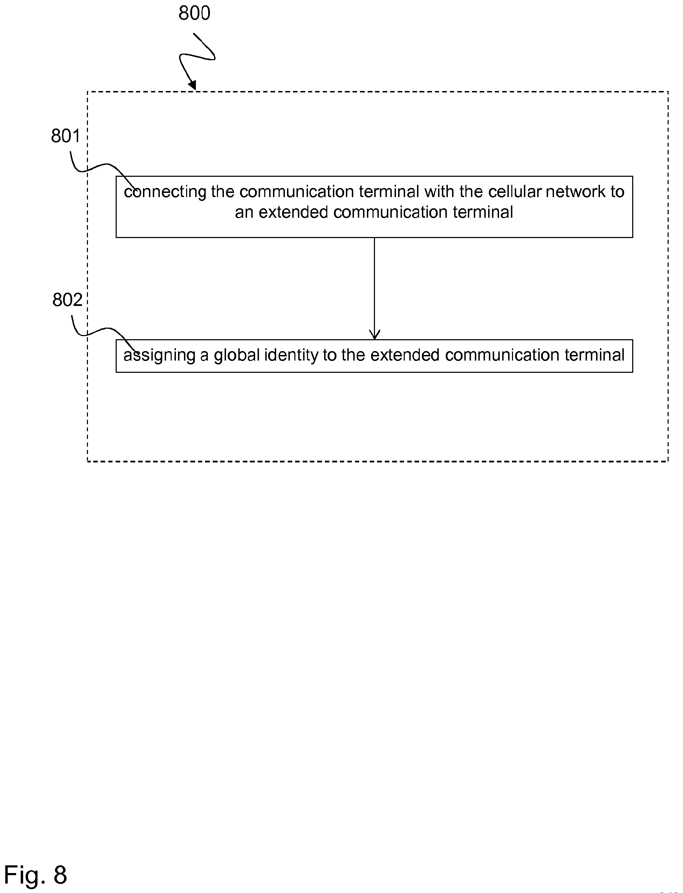

Fig. 8 shows a schematic diagram of a method 800 for connecting a communication terminal comprising a global identity to a communication network, e.g. a 5G communication network, according to the disclosure.

The method 800 comprises connecting 801, by a network device, the at least one communication terminal at least temporarily with the cellular network to an extended communication terminal for processing applications of the at least one communication terminal, e.g. as described above with respect to Figures 1 to 7, in particular with respect to Fig. 1, wherein the at least one communication terminal comprises a terminal-side conversion table for translating the global identity into a temporary identity, wherein a corresponding conversion table is hold in a central location of the cellular network.

The method further comprises assigning 802, by the network device, a global identity to the extended communication terminal, wherein the global identity is derived from a network-side conversion table converting global identities in the cellular network to temporary identities of extended communication terminals according to a conversion scheme that enables unique utilization of temporary identities within the communication network, wherein the network-side conversion table has a central representation in the cellular network that allows identity management in the cellular network ensuring that the at least one communication terminal appears for external parties with different identities, e.g. as described above with respect to Figures 1 to 7, in particular with respect to Fig. 1.

By applying such conversion tables, the same temporarily identity, e.g. an IMSI, assigned to the communication terminal can be used several times in different network components of the communication network, e.g. in different temporarily 5G networks or EDGE components. Multiple use of IMSls in temporarily 5G networks (EDGE computing) can be enabled by address translation provided by the conversion table. This makes authentication in 5G networks more flexible across network boundaries.

Another aspect of the invention is related to a computer program product comprising program code for performing the methods and procedures or the functionalities described above, when executed on a computer or a processor. The method may be implemented as program code that may be stored on a non-transitory computer medium. The computer program product may implement the techniques described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. A communication system (100) for providing communication within a 5G communication network (101), the communication system, comprising:
at least one communication terminal (110) comprising a global identity, wherein
the communication terminal is a 5G device, wherein the at least one communication terminal (110) comprises a terminal-side conversion table (111) for translating the global identity into a temporary identity, wherein the communication terminal is identified by its temporary identity, wherein the temporary identity is an IMSI or an SUPI, wherein the terminal-side conversion table (111) is part of a central representation (131) that is hold in a central location of the cellular network;
a network device (120) configured to connect the at least one communication terminal (110) at least temporarily with the cellular network (101), wherein the network device (120) and the at least one communication terminal (110) form an extended communication terminal (112) for processing applications of the at least one communication terminal (110) and to assign a global identity, which is a global IMSI (218) or a global SUPI, to the extended communication terminal (112),
wherein the network device is a 5G EDGE (217),
wherein the network device is configured to authenticate the at least one communication terminal (110) based on the terminal's temporary identity,
wherein the connection between the extended communication terminal (112) and the 5G core network (101) is identified and addressed based on the global IMSI or the global SUPI assigned to the extended terminal (112) and a device ID of the extended terminal (112),
wherein the network device (120) is configured to derive the global identity from a network-side conversion table (121) that shows a conversion of global identities in the cellular network (101) to temporary identities of extended communication terminals (112) according to a conversion scheme that enables unique utilization of temporary identities within the cellular network,
wherein the network-side conversion table (121) is part of the central representation (131) in the cellular network (101) that allows identity management in the cellular network (101) ensuring that the at least one communication terminal (110) appears for external parties with different identities.

2. The communication system (100) of one of the preceding claims,
configured to authenticate the at least one communication terminal (110) based on the temporary identity of the at least one communication terminal (110) and configured to authenticate the extended communication terminal (112) based on the global identity assigned to the extended communication terminal (112).

3. The communication system (100) of one of the preceding claims,
wherein the network device (120) is configured to enable assigning the same temporary identity to the extended communication terminal (112) within non-overlapping time intervals allowing time-wise sequential reuse, and to block assigning the same temporary identity to two different devices within a same time interval.

4. The communication system (100) of one of the preceding claims,
wherein the temporary identity is encrypted according an encryption of a Subscription Concealed Identifier, SUCI.

5. The communication system (100) of one of the preceding claims,
wherein an IMSI, SUPI or SUCI of the at least one communication terminal (110) is stored or calculated by a subscriber identity module, SIM (402), associated with the at least one communication terminal (110); and
wherein the network device (120) is configured to authenticate the extended communication terminal (112) based on the SIM (402).

6. The communication system (100) of one of the preceding claims,
wherein the network device (120) is configured to establish an end-to-end encrypted tunnel (624) and/or to exchange a symmetric key between the extended communication terminal (112) and a remote communication terminal based on authentication with a temporary identity of the extended communication terminal (112).

7. The communication system (100) of one of the preceding claims,
wherein the cellular network (101) or the edge computing device (217) comprises a block chain (405) or distributed ledger (405) for storing the network-side conversion table (121).

8. The communication system (100) of claim 7,
wherein the communication terminal (110) or the cellular network (101) or an edge computing device (217) is configured to create a new entry (501) related to a new temporary identity in the block chain (405) or distributed ledger (405).

9. The communication system (100) of claim 8,
wherein the new block chain or distributed ledger entry (501) comprises the temporary identity and a hash pointer (502) pointing to a previous entry (503) with a previous temporary identity of the same extended communication terminal (112).

10. The communication system (100) of claim 8 or 9,
wherein the communication terminal (110) or the cellular network (101) or the edge computing device (217) is configured to check the block chain (405) or distributed ledger (405) for collisions with the new created temporary identity and other temporary identities already in use.

## Patentansprüche

1. Kommunikationssystem (100) zum Bereitstellen von Kommunikation innerhalb eines 5G-Kommunikationsnetzwerks (101), wobei das Kommunikationssystem umfasst:
mindestens ein Kommunikationsendgerät (110), das eine globale Identität aufweist, wobei das Kommunikationsendgerät eine 5G-Vorrichtung ist, wobei das mindestens eine Kommunikationsendgerät (110) eine endgeräteseitige Umwandlungstabelle (111) zum Übersetzen der globalen Identität in eine temporäre Identität aufweist, wobei das Kommunikationsendgerät durch seine temporäre Identität identifiziert wird, wobei die temporäre Identität eine IMSI oder eine SUPI ist, wobei die endgeräteseitige Umwandlungstabelle (111) Teil einer zentralen Darstellung (131) ist, die an einem zentralen Ort des zellularen Netzwerks gehalten wird; eine Netzwerkvorrichtung (120), die dazu eingerichtet ist, das mindestens eine Kommunikationsendgerät (110) mindestens temporär mit dem zellularen Netzwerk (101) zu verbinden, wobei die Netzwerkvorrichtung (120) und das mindestens eine Kommunikationsendgerät (110) ein erweitertes Kommunikationsendgerät (112) zum Verarbeiten von Applikationen des mindestens einen Kommunikationsendgeräts (110) bilden, und dem erweiterten Kommunikationsendgerät (112) eine globale Identität zuzuweisen, die eine globale IMSI (218) oder eine globale SUPI ist, wobei die Netzwerkvorrichtung eine 5G-EDGE (217) ist, wobei die Netzwerkvorrichtung dazu eingerichtet ist, das mindestens eine Kommunikationsendgerät (110) basierend auf der temporären Identität des Endgeräts zu authentifizieren, wobei die Verbindung zwischen dem erweiterten Kommunikationsendgerät (112) und dem 5G-Kernnetzwerk (101) basierend auf der globalen IMSI oder der globalen SUPI, die dem erweiterten Endgerät (112) zugewiesen ist, und einer Vorrichtungs-ID des erweiterten Endgeräts (112) identifiziert und adressiert wird, wobei die Netzwerkvorrichtung (120) dazu eingerichtet ist, die globale Identität aus einer netzwerkseitigen Umwandlungstabelle (121) abzuleiten, welche eine Umwandlung von globalen Identitäten in dem zellularen Netzwerk (101) in temporäre Identitäten von erweiterten Kommunikationsendgeräten (112) gemäß einem Umwandlungsschema zeigt, das eine eindeutige Nutzung von temporären Identitäten innerhalb des zellularen Netzwerks ermöglicht,
wobei die netzwerkseitige Umwandlungstabelle (121) Teil der zentralen Darstellung (131) in dem zellularen Netzwerk (101) ist, die ein Identitätsmanagement in dem zellularen Netzwerk (101) ermöglicht, das sicherstellt, dass das mindestens eine Kommunikationsendgerät (110) externen Parteien gegenüber mit unterschiedlichen Identitäten auftritt.

2. Kommunikationssystem (100) nach einem der vorhergehenden Ansprüche, das dazu eingerichtet ist, das mindestens eine Kommunikationsendgerät (110) basierend auf der temporären Identität des mindestens einen Kommunikationsendgeräts (110) zu authentifizieren, und dazu eingerichtet ist, das erweiterte Kommunikationsendgerät (112) basierend auf der dem erweiterten Kommunikationsendgerät (112) zugewiesenen globalen Identität zu authentifizieren.

3. Kommunikationssystem (100) nach einem der vorhergehenden Ansprüche, wobei die Netzwerkvorrichtung (120) dazu eingerichtet ist, das Zuweisen gleicher temporärer Identitäten an das erweiterte Kommunikationsendgerät (112) innerhalb nicht überlappender Zeitintervalle zu ermöglichen, so dass mit der Zeit eine sequenzielle Wiederverwendung ermöglicht wird, und das Zuweisen gleicher temporärer Identitäten an zwei unterschiedliche Vorrichtungen innerhalb eines gleichen Zeitintervalls zu blockieren.

4. Kommunikationssystem (100) nach einem der vorhergehenden Ansprüche, wobei die temporäre Identität gemäß einer Verschlüsselung eines Subscription Concealed Identifier, SUCI, verschlüsselt ist.

5. Kommunikationssystem (100) nach einem der vorhergehenden Ansprüche, wobei eine IMSI, SUPI oder SUCI des mindestens einen Kommunikationsendgeräts (110) durch ein Teilnehmeridentitätsmodul, SIM (402), das dem mindestens einen Kommunikationsendgerät (110) zugeordnet ist, gespeichert oder berechnet wird; und
wobei die Netzwerkvorrichtung (120) dazu eingerichtet ist, das erweiterte Kommunikationsendgerät (112) basierend auf dem SIM (402) zu authentifizieren.

6. Kommunikationssystem (100) nach einem der vorhergehenden Ansprüche, wobei die Netzwerkvorrichtung (120) dazu eingerichtet ist, einen Ende-zu-Ende verschlüsselten Tunnel (624) aufzubauen und/oder einen symmetrischen Schlüssel zwischen dem erweiterten Kommunikationsendgerät (112) und einem entfernten Kommunikationsendgerät auszutauschen basierend auf einer Authentifizierung mit einer temporären Identität des erweiterten Kommunikationsendgeräts (112).

7. Kommunikationssystem (100) nach einem der vorhergehenden Ansprüche, wobei das zellulare Netzwerk (101) oder die Edge-Computing-Vorrichtung (217) eine Blockchain (405) oder ein verteiltes Transaktionsbuch (405) zum Speichern der netzwerkseitigen Umwandlungstabelle (121) aufweist.

8. Kommunikationssystem (100) nach Anspruch 7,
wobei das Kommunikationsendgerät (110) oder das zellulare Netzwerk (101) oder eine Edge-Computing-Vorrichtung (217) dazu eingerichtet ist, einen neuen Eintrag (501) zu erzeugen, der sich auf eine neue temporäre Identität in der Blockchain (405) oder dem verteilten Transaktionsbuch (405) bezieht.

9. Kommunikationssystem (100) nach Anspruch 8,
wobei der neue Eintrag (501) in der Blockchain oder dem verteilten Transaktionsbuch die temporäre Identität und einen Hash-Zeiger (502) umfasst, der auf einen vorherigen Eintrag (503) mit einer vorherigen temporären Identität desselben erweiterten Kommunikationsendgeräts (112) zeigt.

10. Kommunikationssystem (100) nach Anspruch 8 oder 9,
wobei das Kommunikationsendgerät (110) oder das zellulare Netzwerk (101) oder die Edge-Computing-Vorrichtung (217) dazu eingerichtet ist, die Blockchain (405) oder das verteilte Transaktionsbuch (405) auf Kollisionen zwischen der neu erzeugten temporären Identität und anderen bereits verwendeten temporären Identitäten zu überprüfen.

## Revendications

1. Système de communication (100) pour fournir une communication au sein d'un réseau de communication 5G (101), le système de communication comprenant :
au moins un terminal de communication (110) comprenant une identité globale, dans lequel le terminal de communication est un dispositif 5G, dans lequel au moins un terminal de communication (110) comprend une table de conversion côté terminal (111) pour traduire l'identité globale en une identité temporaire, dans lequel le terminal de communication est identifié par son identité temporaire, dans lequel l'identité temporaire est un IMSI ou un SUPI, dans lequel la table de conversion côté terminal (111) fait partie d'une représentation centrale (131) qui est conservée dans un emplacement central du réseau cellulaire ;
un dispositif de réseau (120) configuré pour connecter le ou les terminaux de communication (110) au moins temporairement au réseau cellulaire (101), dans lequel le dispositif de réseau (120) et au moins un terminal de communication (110) forment un terminal de communication étendue (112) pour traiter les applications dudit au moins un terminal de communication (110) et pour attribuer une identité globale, qui est un IMSI global (218) ou un SUPI global, au terminal de communication étendu (112),
dans lequel le dispositif de réseau est un 5G EDGE (217),
dans lequel le dispositif de réseau est configuré pour authentifier ledit au moins un terminal de communication (110) sur la base de l'identité temporaire du terminal,
dans lequel la connexion entre le terminal de communication étendu (112) et le réseau central 5G (101) est identifiée et adressée sur la base de l'IMSI global ou du SUPI global attribué au terminal étendu (112) et d'un ID de dispositif du terminal étendu (112),
dans lequel le dispositif de réseau (120) est configuré pour déduire l'identité globale d'une table de conversion côté réseau (121) qui montre une conversion d'identités globales dans le réseau cellulaire (101) en identités temporaires de terminaux de communication étendus (112) selon un schéma de conversion qui permet une utilisation unique d'identités temporaires dans le réseau cellulaire,
dans lequel la table de conversion côté réseau (121) fait partie de la représentation centrale (131) dans le réseau cellulaire (101) qui permet la gestion d'identité dans le réseau cellulaire (101) garantissant que le ou les terminaux de communication (110) apparaissent pour des parties externes avec des identités différentes.

2. Système de communication (100) selon une des revendications précédentes, configuré pour authentifier le au moins un terminal de communication (110) sur la base de l'identité temporaire du au moins un terminal de communication (110) et configuré pour authentifier le terminal de communication étendu (112) sur la base de l'identité globale attribuée au terminal de communication étendu (112).

3. Système de communication (100) selon une des revendications précédentes, dans lequel le dispositif de réseau (120) est configuré pour permettre d'attribuer la même identité temporaire au terminal de communication étendu (112) dans des intervalles de temps sans superposition permettant une réutilisation séquentielle temporelle et bloquer l'attribution de la même identité temporaire à deux appareils différents dans un même intervalle de temps.

4. Système de communication (100) selon une des revendications précédentes, dans lequel l'identité temporaire est cryptée selon un cryptage d'un identifiant caché d'abonnement, SUCI.

5. Système de communication (100) selon une des revendications précédentes, dans lequel un IMSI, SUPI ou SUCI du au moins un terminal de communication (110) est stocké ou calculé par un module d'identité d'abonné, SIM (402), associé à au moins un terminal de communication (110) ; et dans lequel le dispositif de réseau (120) est configuré pour authentifier le terminal de communication étendu (112) sur la base de la carte SIM (402).

6. Système de communication (100) selon une des revendications précédentes, dans lequel le dispositif de réseau (120) est configuré pour établir un tunnel crypté de bout en bout (624) et/ou pour échanger une clé symétrique entre le terminal de communication étendu (112) et un terminal de communication distant sur la base d'une authentification avec une identité temporaire du terminal de communication étendu (112).

7. Système de communication (100) selon une des revendications précédentes, dans lequel le réseau cellulaire (101) ou le dispositif informatique de périphérie (217) comprend une chaîne de blocs (405) ou un registre distribué (405) pour stocker la table de conversion côté réseau (121).

8. Système de communication (100) selon la revendication 7, dans lequel le terminal de communication (110) ou le réseau cellulaire (101) ou un dispositif informatique périphérique (217) est configuré pour créer une nouvelle entrée (501) liée à une nouvelle identité temporaire dans la chaîne de blocs (405) ou le registre distribué (405).

9. Système de communication (100) selon la revendication 8, dans lequel la nouvelle chaîne de blocs ou l'entrée de registre distribué (501) comprend l'identité temporaire et un pointeur de hachage (502) pointant vers une entrée précédente (503) avec une identité temporaire précédente du même terminal de communication étendu (112).

10. Système de communication (100) selon la revendication 8 ou 9, dans lequel le terminal de communication (110) ou le réseau cellulaire (101) ou le dispositif informatique périphérique (217) est configuré pour vérifier la chaîne de blocs (405) ou le registre distribué (405) en recherchant des collisions avec la nouvelle identité temporaire créée et d'autres identités temporaires déjà utilisées.
